# EUROPÄISCHE PATENTANMELDUNG

(11) **EP 3 903 967 A1**
(43) Veröffentlichungstag der Anmeldung: **03.11.2021**
(21) Anmeldenummer: 20172063.8
(22) Anmeldetag: 29.04.2020
(51) Int. Cl.: B22F 3/00, B22F 3/105, B29C 64/118, B29C 64/209, B29C 64/236, B29C 64/241, B29C 64/245, B33Y 30/00

(54) **ANORDNUNG ZUR MATERIALEXTRUSION BEI EINER ADDITIVEN FERTIGUNG EINES DREIDIMENSIONALEN DRUCKOBJEKTS**

(71) Anmelder: Siemens Aktiengesellschaft, 80333 München (DE)
(72) Erfinder: Jähnicke, Jens, 09112 Chemnitz (DE); Schmid, Marcus, Erlangen (DE)

(57) **Zusammenfassung**

Die Erfindung betrifft eine Anordnung (2) zur Materialextrusion bei einer additiven Fertigung eines dreidimensionalen Druckobjekts (36) mit einer Düsenanordnung (4). Um eine höhere Fertigungsgeschwindigkeit zu ermöglichen wird vorgeschlagen, dass die Düsenanordnung (4) translatorisch in drei Achsen (X, Y, Z) verfahrbar ist und eine erste Düse (6) sowie zumindest eine zweite Düse (8) umfasst, wobei die erste Düse (6) konfiguriert ist, ein erstes Extrusionsmaterial (32) durch einen ersten Auslass (12) zu extrudieren, wobei die zumindest eine zweite Düse (8) konfiguriert ist, gleichzeitig ein zweites Extrusionsmaterial (34) durch einen zweiten Auslass (14) zu extrudieren, wobei die zumindest eine zweite Düse (8) im Verhältnis zur ersten Düse (6) derartig drehbar angeordnet ist, dass die Düsen (6, 8) auf einer zu druckenden gekrümmten Bahn (38) jeweils zentriert angeordnet sind.

## Beschreibung

Die Erfindung betrifft eine Anordnung zur Materialextrusion bei einer additiven Fertigung eines dreidimensionalen Druckobjekts mit einer Düsenanordnung.

Ferner betrifft die Erfindung ein Verfahren zur Materialextrusion bei einer additiven Fertigung eines dreidimensionalen Druckobjekts mit einer Düsenanordnung.

Darüber hinaus betrifft die Erfindung eine Steuereinheit mit Mitteln zur Durchführung eines derartigen Verfahrens.

Eine additive Fertigung derartiger dreidimensionaler Druckobjekte anhand von Formvorschriften, die in einem Computerprogramm oder in einer Datei gespeichert sind, erfolgt beispielsweise mittels Filament-3D-Druck. Gängige Verfahren sind beispielsweise "Fused Deposition Modeling" (FDM) oder "Fused Filament Fabrication" (FFF), bei welchen ein Werkstoff, insbesondere ein Kunststoff oder ein Harz geschmolzen, verdichtet, über zumindest eine Düse zu einem Filament geformt und anschließend abgekühlt wird. Insbesondere wird der geschmolzene Werkstoff entlang eines vorher festgelegten Pfades auf einem Untergrund aufgetragen. Der Untergrund ist entweder das unfertige Werkstück oder ein Stützelement, insbesondere eine Oberfläche, auf der das Werkstück entstehen soll.

Das Formen des Werkstoffs zu einem Filament wird auch Extrusion genannt, wobei der Werkstoff als Extrusionsmaterial bezeichnet wird. Als Extrusionsmaterial wird, neben dem genannten Kunststoff oder Harz, auch Metall, welches geschmolzen wird, verwendet. Optional enthält der, insbesondere thermoplastische, Kunststoff eine Füllung aus Metall- oder Keramikpartikeln, wobei die metall- oder keramikgefüllten Filamente nach dem Druckvorgang, beispielsweise durch einen Entbinderungs- und Sinterprozess, weiterverarbeitet werden.

Die Offenlegungsschrift DE 10 2018 003 864 A1 beschreibt ein Verfahren zum Drucken und Sintern von Formkörpern, welche aus metall- und keramikgefüllten Filamenten erzeugt werden.

Die Offenlegungsschrift EP 3 283 272 A1 beschreibt eine Vorrichtung zum Auftragen zumindest eines Werkstoffes auf einen Untergrund oder ein Werkstück. Die Vorrichtung weist einen Grundkörper mit einem Auslass für die Werkstoffe auf. Die Werkstoffe werden durch zumindest zwei Zugangskanäle dem Auslass zugeführt und dort vermischt und/oder vermengt. Durch eine Drehbewegung des Grundkörpers in Bezug zum Untergrund oder dem Werkstück vermengen sich die Werkstoffe analog einer Doppelhelix, bzw. eines Zopfes. Bei Anwendung auf ein 3D-Druckverfahren dreht sich entweder das Werkstück um eine Drehachse, die durch den Auslass des Grundkörpers verläuft, oder der Grundkörper und damit der Auslass selbst.

Derartige additiven Fertigungsverfahren sind, insbesondere verglichen mit konventioneller Fertigung, langsam, was aufgrund der Maschinenkosten zu höheren Stückkosten führt.

Der Erfindung liegt die Aufgabe zugrunde, eine Anordnung zur Materialextrusion bei einer additiven Fertigung eines dreidimensionalen Druckobjekts anzugeben, durch die eine höhere Fertigungsgeschwindigkeit ermöglicht wird.

Die Aufgabe wird erfindungsgemäß durch eine Anordnung zur Materialextrusion bei einer additiven Fertigung eines dreidimensionalen Druckobjekts mit einer Düsenanordnung gelöst, wobei die Düsenanordnung translatorisch in drei Achsen verfahrbar ist und eine erste Düse sowie zumindest eine zweite Düse umfasst, wobei die erste Düse konfiguriert ist, ein erstes Extrusionsmaterial durch einen ersten Auslass zu extrudieren, wobei die zumindest eine zweite Düse konfiguriert ist, gleichzeitig ein zweites Extrusionsmaterial durch einen zweiten Auslass zu extrudieren, wobei die zumindest eine zweite Düse im Verhältnis zur ersten Düse derartig drehbar angeordnet ist, dass die Düsen auf einer zu druckenden gekrümmten Bahn jeweils zentriert angeordnet sind.

Darüber hinaus wird die Aufgabe erfindungsgemäß durch ein Verfahren zur Materialextrusion bei einer additiven Fertigung eines dreidimensionalen Druckobjekts mit einer Düsenanordnung gelöst, wobei die Düsenanordnung translatorisch in drei Achsen verfahrbar ist und eine erste Düse sowie zumindest eine zweite Düse umfasst, wobei mit der ersten Düse ein erstes Extrusionsmaterial durch einen ersten Auslass extrudiert wird, wobei mit der zumindest einen zweiten Düse gleichzeitig ein zweites Extrusionsmaterial durch einen zweiten Auslass extrudiert wird, wobei die zumindest eine zweite Düse im Verhältnis zur ersten Düse derartig gedreht wird, dass die Düsen auf einer zu druckenden gekrümmten Bahn jeweils zentriert angeordnet werden.

Ferner wird die Aufgabe erfindungsgemäß durch eine Steuereinheit mit Mitteln zur Durchführung eines derartigen Verfahrens gelöst.

Die in Bezug auf die Anordnung nachstehend angeführten Vorteile und bevorzugten Ausgestaltungen lassen sich sinngemäß auf das Verfahren und die Steuereinheit übertragen.

Der Erfindung liegt die Überlegung zugrunde, die additive Fertigung eines dreidimensionalen Druckobjekts mittels Extrusion zu beschleunigen, indem mindestens zwei Düsen gleichzeitig drucken. Unter einem gleichzeitigen Druck ist zu verstehen, dass die mindestens zwei Düsen gleichzeitig und kontinuierlich Filamente zum Erzeugen des dreidimensionalen Druckobjekts erzeugen. Dazu wird eine translatorisch in drei Achsen verfahrbare Düsenanordnung vorgeschlagen, welche mindestens zwei Düsen umfasst, die jeweils einen Auslass zum Extrudieren eines Extrusionsmaterials aufweisen. Zum translatorischen Verfahren kommen insbesondere Stellglieder zum Einsatz, welche beispielsweise einen Elektromotor aufweisen und von einer Steuereinheit angesteuert werden. Die Düsen der Düsenanordnung sind insbesondere in einem gemeinsamen Druckkopf aufgenommen, über welchen das Extrusionsmaterial zugeführt wird. Beispielsweise weisen die Düsen zumindest im Bereich des Auslasses einen punktsymmetrischen, insbesondere kreisförmigen, Querschnitt auf. Zum Drucken von dreidimensionalen Druckobjekten, welche gekrümmte Oberflächen aufweisen, ist es erforderlich, dass die Filamente auf einer gekrümmten Bahn extrudiert werden. Um mit mindestens zwei Düsen gleichzeitig auf einer gekrümmten Bahn zu drucken, wird die mindestens eine zweite Düse im Verhältnis zur ersten Düse um einen Drehwinkel drehbar angeordnet. Während des Druckens auf der gekrümmten Bahn wird der Drehwinkel durch Drehen der zumindest einen zweiten Düse dynamisch justiert, sodass die gleichzeitig druckenden Düsen der Düsenanordnung stets auf der zu druckenden gekrümmten Bahn jeweils zentriert angeordnet sind. Die dynamische Justierung wird von der Steuereinheit gesteuert. Durch eine derartige Anordnung sind auch komplexe Druckobjekte schnell kostengünstig mittels Extrusion realisierbar. Die Mittel zu Durchführung des Verfahrens der Steuereinheit umfassen beispielswiese einen digitalen Logikbaustein, insbesondere einen Mikroprozessor, einen Mikrocontroller, einen FPGA (field programmable gate array), einen ASIC (application-specific integrated circuit), der für den Betrieb der Anordnung zur Materialextrusion konfiguriert ist.

Eine weitere Ausführungsform sieht vor, dass die eine Anordnung zur Materialextrusion ein Stützelement aufweist, auf welchem ein zu druckendes dreidimensionales Druckobjekt anordenbar ist, wobei das Stützelement zumindest rotatorisch beweglich ist. Das Stützelement ist ein, insbesondere ebenes, Element, beispielsweise eine Glasplatte, eine Polymerplatte oder eine Schaumstoffoberfläche, die das zu druckende dreidimensionale Druckobjekt während des Druckvorgangs stützt. Insbesondere ist das Stützelement ein Teil eines Drucktisches, welcher über zumindest ein Stellglied, welches insbesondere einen Elektromotor umfasst, rotatorisch beweglich ist. Das dreidimensionale Druckobjekt wird beispielsweise adhäsiv auf der Druckplatte während des Druckvorgangs gehalten. Durch ein derartiges rotatorisch bewegliches Stützelement wird das Drucken von Überhängen ohne zusätzliche Stützstrukturen ermöglicht, was den Druckvorgang beschleunigt und Kosten einspart.

Besonders vorteilhaft ist das Stützelement rotatorisch um einen Azimutwinkel und einen Elevationswinkel beweglich. Zusammen mit einer translatorisch in drei Achsen verfahrbaren Düsenanordnung spricht man von einem Fünf-Achsen-Druck. Durch die rotatorischen Freiheitsgrade in Azimutrichtung und Elevationsrichtung wird das Drucken von komplexen Objekten schnell und kostengünstig ermöglicht.

Eine weitere Ausführungsform sieht vor, dass der zweite Auslass der zweiten Düse im Verhältnis zum ersten Auslass der, insbesondere vorlaufenden, ersten Düse einen ersten Höhenunterschied aufweist, sodass die Extrusionsmaterialien aufeinander extrudierbar sind. Beispielsweise sind die Düsen im Abstand einer Filamenthöhe unterschiedlich hoch ausgerichtet, wobei das zweite Extrusionsmaterial der zweiten Düse auf das erste Extrusionsmaterial der vorlaufenden ersten Düse gedruckt wird. Durch das gleichzeitige Drucken mehrerer Filamente aufeinander wird der Druckvorgang beschleunigt, was Zeit und Kosten einspart.

Eine weitere Ausführungsform sieht vor, dass das erste Extrusionsmaterial dem zweiten Extrusionsmaterial entspricht. Insbesondere werden die Extrusionsmaterialien aus einem gemeinsamen Reservoir entnommen, sodass eine Komplexität der Anordnung reduziert wird. Durch die Verwendung identischer Materialien wird die Fertigung und die Weiterverarbeitung vereinfacht.

Eine weitere Ausführungsform sieht vor, dass die Düsenanordnung eine dritte Düse umfasst, welche konfiguriert ist, gleichzeitig zum ersten Extrusionsmaterial und zum zweiten Extrusionsmaterial, ein drittes Extrusionsmaterial durch einen dritten Auslass zu extrudieren, wobei die dritte Düse im Verhältnis zur ersten Düse derartig drehbar angeordnet ist, dass die Düsen auf einer zu druckenden gekrümmten Bahn jeweils zentriert angeordnet sind. Sowohl die zweite Düse als auch die dritte Düse werden jeweils bezogen auf die erste Düse rotiert. Es wird bei gegebenen Abständen der zweiten Düse und der dritten Düse zur ersten Düse jeweils lediglich ein Drehwinkel variiert, was die Komplexität der Berechnung reduziert. Durch die Verwendung einer dritten Düse wird der Druckvorgang zusätzlich beschleunigt, was Zeit und Kosten einspart.

Eine weitere Ausführungsform sieht vor, dass der zweite Auslass der zweiten Düse im Verhältnis zum ersten Auslass der, insbesondere bezüglich der zweiten Düse vorlaufenden, ersten Düse einen ersten Höhenunterschied aufweist, wobei der dritte Auslass der dritten Düse im Verhältnis zum zweiten Auslass der, insbesondere bezüglich der dritten Düse vorlaufenden, zweiten Düse einen zweiten Höhenunterschied aufweist, sodass die Extrusionsmaterialien aufeinander extrudierbar sind. Durch das gleichzeitige Drucken zusätzlicher Filamente aufeinander wird der Druckvorgang weiter beschleunigt, was zusätzliche Zeit und Kosten einspart.

Eine weitere Ausführungsform sieht vor, dass zumindest zwei Düsen parallel angeordnet sind. Insbesondere sind die Düsen parallel entlang der Z-Achse mit einem vorgegebenen Düsenabstand ausgerichtet. Durch eine parallele Ausrichtung der Düsen wird ein einheitliches Druckbild, insbesondere eine einheitliche Filamenthöhe, erreicht.

Im Folgenden wird die Erfindung anhand der in den Figuren dargestellten Ausführungsbeispiele näher beschrieben und erläutert.

Es zeigen:
- FIG 1: eine schematische Längsschnittdarstellung einer Anordnung zur Materialextrusion mit einer ersten Ausgestaltung einer Düsenanordnung,
- FIG 2: eine schematische Querschnittdarstellung einer ersten Ausgestaltung einer Düsenanordnung,
- FIG 3: eine schematische Längsschnittdarstellung einer Anordnung zur Materialextrusion mit einer zweiten Ausgestaltung einer Düsenanordnung,
- FIG 4: eine schematische Querschnittdarstellung einer zweiten Ausgestaltung einer Düsenanordnung,
- FIG 5: eine schematische Darstellung eines Extrusionsverfahrens mit einer Düsenanordnung mit zwei Düsen,
- FIG 6: eine schematische Darstellung eines Extrusionsverfahrens mit einer Düsenanordnung mit zwei Düsen zum Drucken eines Überhangs,
- FIG 7: eine schematische Darstellung eines Extrusionsverfahrens mit einer Düsenanordnung mit zwei Düsen beim Drucken einer gekrümmten Bahn und
- FIG 8: eine schematische dreidimensionale Darstellung eines Extrusionsverfahrens mit einer Düsenanordnung mit drei Düsen beim Drucken einer gekrümmten Bahn.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

Gleiche Bezugszeichen haben in den verschiedenen Figuren die gleiche Bedeutung.

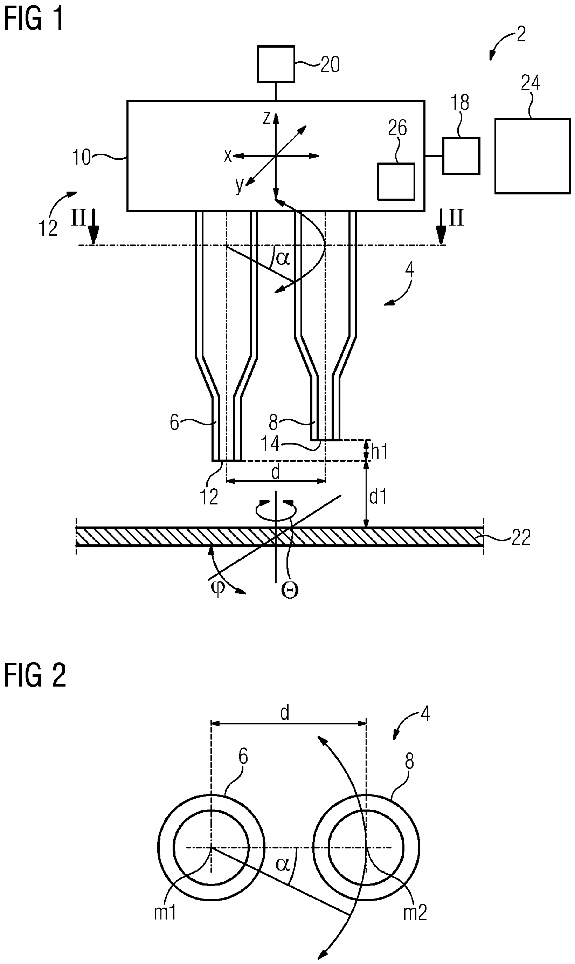

FIG 1 zeigt eine schematische Längsschnittdarstellung einer Anordnung 2 zur Materialextrusion mit einer ersten Ausgestaltung einer Düsenanordnung 4. Die Düsenanordnung 4 umfasst eine erste Düse 6 sowie eine zweite Düse 8, wobei die Düsen 6, 8 in einem Druckkopf 10 aufgenommen sind. Aus zumindest einem Reservoir wird den Düsen 6, 8 über eine, beispielsweise im Druckkopf angeordnete, Ventilanordnung zumindest ein Extrusionsmaterial zur Verfügung gestellt. Das Reservoir sowie die Ventilanordnung sind aus Gründen der Übersichtlichkeit in FIG 1 nicht dargestellt. Die erste Düse 6 ist so konfiguriert, dass ein erstes Extrusionsmaterial durch einen ersten Auslass 12 extrudierbar ist. Die zweite Düse 8 ist so konfiguriert, dass gleichzeitig ein zweites Extrusionsmaterial durch einen zweiten Auslass 14 extrudierbar ist. Optional entspricht das erste Extrusionsmaterial dem zweiten Extrusionsmaterial. Die Düsen 6, 8 sind parallel entlang der Z-Achse mit einem vorgegebenen Düsenabstand d ausgerichtet. Der Druckkopf 10 zusammen mit den Düsen 6, 8 wird als Extruder 16 bezeichnet und ist mit Hilfe von Stellgliedern 18, 20 translatorisch in drei Achsen X, Y, Z verfahrbar. Beispielsweise wird der Extruder 12 mittels eines X/Y-Stellgliedes 18, insbesondere gleichzeitig, entlang der X- und Y-Achse bewegt, während das Z-Stellglied 20 den Extruder 12 entlang der Z-Achse bewegt, um beispielsweise einen ersten Abstand der ersten Düse von einem Untergrund zu regulieren. Der Untergrund ist entweder das teilweise fertig extrudierte dreidimensionale Druckobjekt oder ein Stützelement 22, welches insbesondere eine Oberfläche umfasst, auf dem das dreidimensionale Druckobjekt extrudiert werden soll. Das Stützelement 22, welches beispielsweise Teil eines Drucktisches ist, ist rotatorisch um einen Azimutwinkel θ und einen Elevationswinkel ϕ beweglich, um beispielsweise das Extrudieren von Überhängen ohne zusätzliche Stützstrukturen zu ermöglichen.

Eine Steuereinheit 24 ist operativ mit den Stellgliedern 18, 20 und mit dem Extruder 12 verbunden. Insbesondere wird ein Betrieb der Düsen 6, 8 durch die Steuereinheit 24 gesteuert. Die Steuereinheit 24 umfasst einen digitalen Logikbaustein, beispielswiese einen Mikroprozessor, einen Mikrocontroller, einen FPGA (field programmable gate array), einen ASIC (application-specific integrated circuit), der für den Betrieb der Anordnung 2 zur Materialextrusion konfiguriert ist.

Die zweite Düse 8 ist im Verhältnis zur ersten Düse 6 derartig um einen ersten Drehwinkel α drehbar ausgeführt, dass die beiden gleichzeitig druckenden Düsen 6, 8 auf einer zu druckenden gekrümmten Bahn jeweils zentriert angeordnet sind. Insbesondere bleibt der Betrag des Düsenabstands d unabhängig vom ersten Drehwinkel α konstant. Ein weiteres Stellglied 26, welches im Druckkopf 10 angeordnet ist und beispielsweise einen Elektromotor umfasst, wird von der Steuereinheit 24 angesteuert, um den ersten Drehwinkel α während des Extrusionsvorgangs dynamisch so zu justieren, dass die gleichzeitig druckenden Düsen 6, 8 auf der zu druckenden gekrümmten Bahn jeweils stets zentriert angeordnet sind.

Darüber hinaus weist der zweite Auslass 14 der zweiten Düse 8 im Verhältnis zum ersten Auslass 12 der, während des Extrusionsvorgangs vorlaufenden, ersten Düse 6 einen ersten Höhenunterschied h1 auf, sodass die Extrusionsmaterialien aufeinander extrudierbar sind. Insbesondere sind die Düsen 6, 8 im Abstand einer Filamenthöhe unterschiedlich hoch ausgerichtet und es wird das zweite Extrusionsmaterial auf das erste Extrusionsmaterial gedruckt, so dass gleichzeitig zwei Filamente aufeinander gedruckt werden.

FIG 2 zeigt eine schematische Querschnittdarstellung einer ersten Ausgestaltung einer Düsenanordnung 4. Die Düsen 6, 8 weisen einen kreisförmigen Querschnitt auf, wobei die erste Düse 6 einen ersten Mittelpunkt m1 und die zweite Düse 8 einen zweiten Mittelpunkt m2 aufweist. Die zweite Düse 8 wird, bezogen auf den zweiten Mittelpunkt m2, um den ersten Mittelpunkt m1 der ersten Düse 6 gedreht, sodass der Betrag des Düsenabstands d unabhängig vom ersten Drehwinkel α konstant bleibt. Die weitere Ausführung der Düsenanordnung 4 in FIG 2 entspricht der Ausführung in FIG 1.

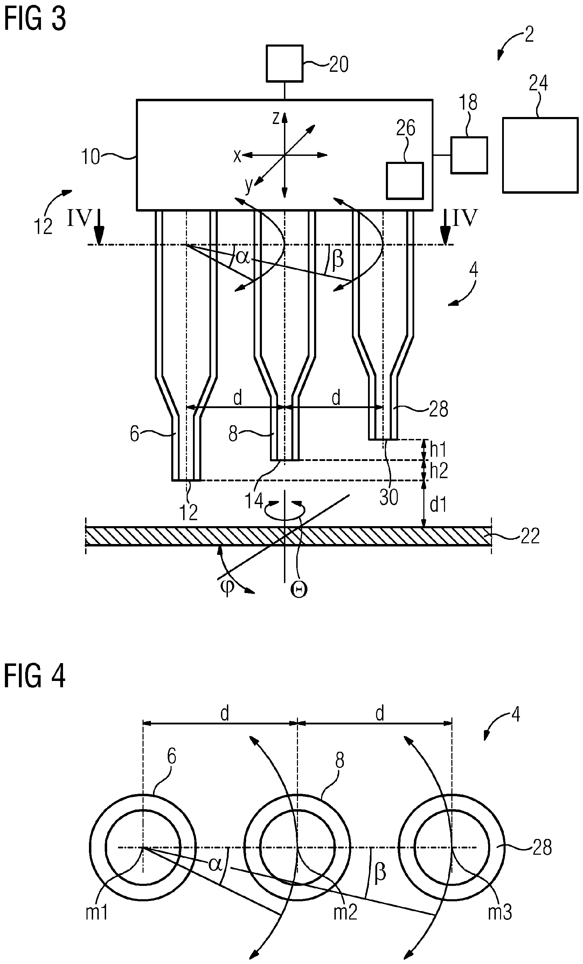

FIG 3 zeigt eine schematische Längsschnittdarstellung einer Anordnung 2 zur Materialextrusion mit einer zweiten Ausgestaltung einer Düsenanordnung 4. Die Düsenanordnung 4 umfasst eine erste Düse 6, eine zweite Düse 8 sowie eine dritte Düse 28, wobei die Düsen 6, 8, 28 in einem Druckkopf 10 aufgenommen sind. Die erste Düse 6 und die zweite Düse 8 sind, wie in FIG 1 gezeigt, ausgeführt. Die dritte Düse 28 ist so konfiguriert, dass, gleichzeitig zum ersten Extrusionsmaterial und zum zweiten Extrusionsmaterial, ein drittes Extrusionsmaterial durch einen dritten Auslass 30 extrudierbar ist. Die Düsen 6, 8, 28 sind parallel und äquidistant entlang der Z-Achse mit einem vorgegebenen Düsenabstand d ausgerichtet.

Die dritte Düse 28 ist, wie die zweite Düse 8, im Verhältnis zur ersten Düse 6 derartig um einen zweiten Drehwinkel β drehbar angeordnet, dass die drei gleichzeitig druckenden Düsen 6, 8, 28 auf einer zu druckenden gekrümmten Bahn jeweils zentriert angeordnet sind. Insbesondere bleibt der Betrag des jeweiligen Düsenabstands d unabhängig von den Drehwinkeln α, β konstant. Das weitere Stellglied 26, welches im Druckkopf 10 angeordnet ist und beispielsweise einen Elektromotor umfasst, wird von der Steuereinheit 24 angesteuert, um den ersten Drehwinkel α und den zweiten Drehwinkel β während des Extrusionsvorgangs dynamisch so zu justieren, dass die gleichzeitig druckenden Düsen 6, 8, 28 auf der zu druckenden gekrümmten Bahn jeweils stets zentriert angeordnet sind.

Darüber hinaus weist der dritte Auslass 30 der dritten Düse 28 im Verhältnis zum zweiten Auslass 14 der, während des Extrusionsvorgangs bezüglich der dritten Düse 28 vorlaufenden, zweiten Düse 8 einen ersten Höhenunterschied h2 auf, sodass alle Extrusionsmaterialien aufeinander extrudierbar sind. Insbesondere sind die Düsen 6, 8 im Abstand einer Filamenthöhe unterschiedlich hoch ausgerichtet. Beispielsweise wird das zweite Extrusionsmaterial auf das erste Extrusionsmaterial und das dritte Extrusionsmaterial auf das zweite Extrusionsmaterial gedruckt, sodass zeitgleich drei Filamente aufeinander gedruckt werden. Die weitere Ausführung der Anordnung 2 zur Materialextrusion in FIG 3 entspricht der Ausführung in FIG 1.

FIG 4 zeigt eine schematische Querschnittdarstellung einer zweiten Ausgestaltung einer Düsenanordnung 4. Die Düsen 6, 8 ,28 weisen einen kreisförmigen Querschnitt auf, wobei die erste Düse 6 einen ersten Mittelpunkt m1, die zweite Düse 8 einen zweiten Mittelpunkt m2 und die dritte Düse 28 einen dritten Mittelpunkt m3 aufweist. Die zweite Düse 8 wird, bezogen auf den zweiten Mittelpunkt m2, um den ersten Mittelpunkt m1 der ersten Düse 6 gedreht, sodass der Betrag des Düsenabstands d unabhängig vom ersten Drehwinkel α konstant bleibt. Die dritte Düse 28 wird, bezogen auf den dritten Mittelpunkt m3, um den ersten Mittelpunkt m1 der ersten Düse 6 gedreht, sodass der Betrag des Abstands der dritten Düse 28 von der ersten Düse 6 unabhängig vom zweiten Drehwinkel β konstant bleibt. Die weitere Ausführung der Düsenanordnung 4 in FIG 4 entspricht der Ausführung in FIG 3.

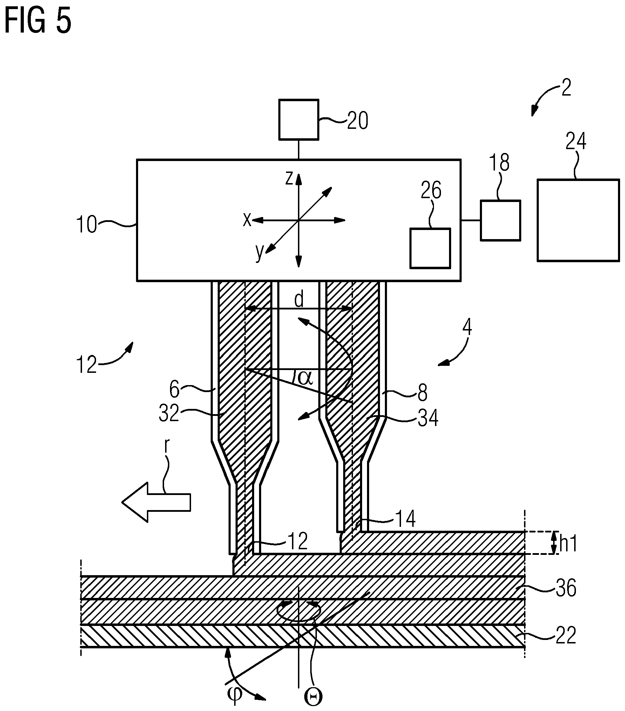

FIG 5 zeigt eine schematische Darstellung eines Extrusionsverfahrens mit einer Düsenanordnung 4 mit zwei Düsen 6, 8. Der Extruder 12 mit der ersten Düse 6 und der zweiten Düse 8 wird in eine Druckrichtung r bewegt, wobei die erste Düse 6 in Druckrichtung r vorlaufend angeordnet ist. Mit der ersten Düse 6 wird ein erstes Extrusionsmaterial 32 durch einen ersten Auslass 12 extrudiert, wobei mit der zweiten Düse 8 gleichzeitig ein zweites Extrusionsmaterial 34 durch einen zweiten Auslass 14 extrudiert wird. Beispielhaft entspricht das erste Extrusionsmaterial 32 dem zweiten Extrusionsmaterial 34. Alternativ werden unterschiedliche Extrusionsmaterialien 32, 34 gedruckt. Durch die Filamente wird ein dreidimensionales Druckobjekt 36 ausgebildet.

Aufgrund des ersten Höhenunterschiedes h1 zwischen der ersten Düse 6 und der zweiten Düse 8 sind die Extrusionsmaterialien 32, 34 aufeinander extrudierbar. Beispielhaft sind die Düsen 6, 8 im Abstand einer Filamenthöhe unterschiedlich hoch ausgerichtet und es wird das zweite Extrusionsmaterial 34 auf das erste Extrusionsmaterial 32 gedruckt, so dass gleichzeitig zwei Filamente aufeinander gedruckt werden. Beispielsweise liegen die zu druckenden, insbesondere gekrümmten, Bahnen der ersten Düse 6 und der zweiten Düse 8 in der X-Y-Ebende übereinander. Von der Steuereinheit 24 wird der erste Drehwinkel α während des Extrusionsvorgangs dynamisch so justiert, dass die gleichzeitig druckenden Düsen 6, 8 auf der zu druckenden gekrümmten Bahn jeweils stets zentriert angeordnet sind. Die weitere Ausführung der Anordnung 2 zur Materialextrusion in FIG 5 entspricht der Ausführung in FIG 1.

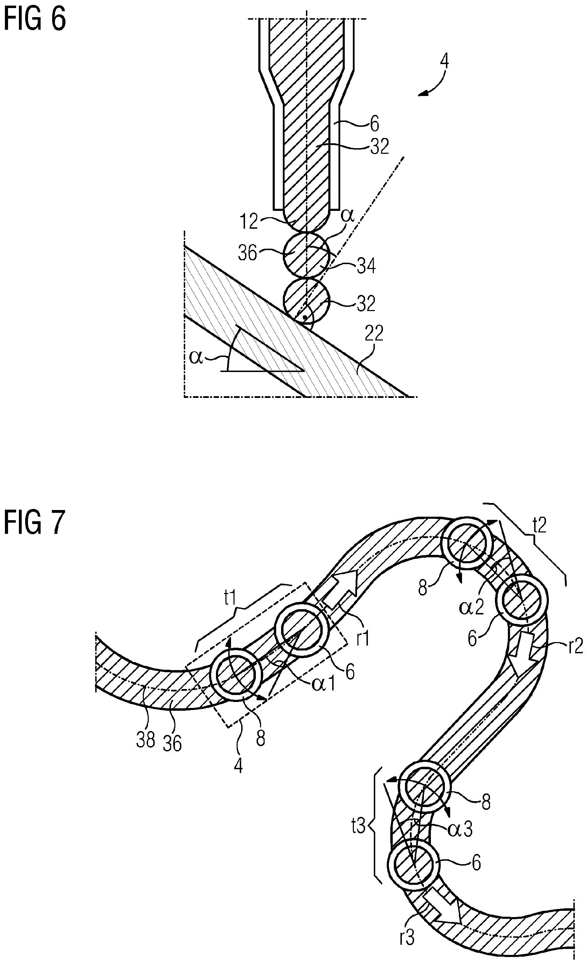

FIG 6 zeigt eine schematische Darstellung eines Extrusionsverfahrens mit einer Düsenanordnung 4 mit zwei Düsen 6, 8 beim Drucken eines Überhangs, wobei das Stützelement 22, um einen Elevationswinkel ϕ verkippt wird, um das Drucken eines Überhangs ohne eine Stützstruktur zu ermöglichen. Die weitere Ausführung des Extrusionsverfahrens in FIG 6 entspricht der Ausführung in FIG 5.

FIG 7 zeigt eine schematische Darstellung eines Extrusionsverfahrens mit einer Düsenanordnung 4 mit zwei Düsen 6, 8, beim Drucken einer gekrümmten Bahn 38, wobei der Druckvorgang zu verschiedenen Zeitpunkten t1, t2, t3 dargestellt ist. Die erste Düse 6 ist in Druckrichtung r vorlaufend ausgeführt, während die zweite Düse 8 in Druckrichtung nachlaufend ausgeführt ist. Die beiden Düsen 6, 8 der Düsenanordnung 4 drucken zeitgleich jeweils ein Filament, wobei die beiden gleichzeitig gedruckten Filamente aufeinander angeordnet werden. Um einen gleichzeitigen Druck zweier übereinander angeordneter Filamente auf der gekrümmten Bahn 38 zu ermöglichen wird während des Extrusionsvorgangs zu jedem Zeitpunkt t1, t2, t3 der jeweilige erste Drehwinkel α1, α2, α3 bezogen auf die Druckrichtung r dynamisch durch Drehen der zweiten Düse 8 so justiert, dass die gleichzeitig druckenden Düsen 6, 8 der Düsenanordnung 4 auf der zu druckenden gekrümmten Bahn 38 jeweils stets zentriert angeordnet sind. Das dreidimensionale Druckobjekt 36 wird aus einer Mehrzahl von übereinander angeordneten Filamenten aufgebaut. Die weitere Ausführung des Extrusionsverfahrens in FIG 7 entspricht der Ausführung in FIG 5.

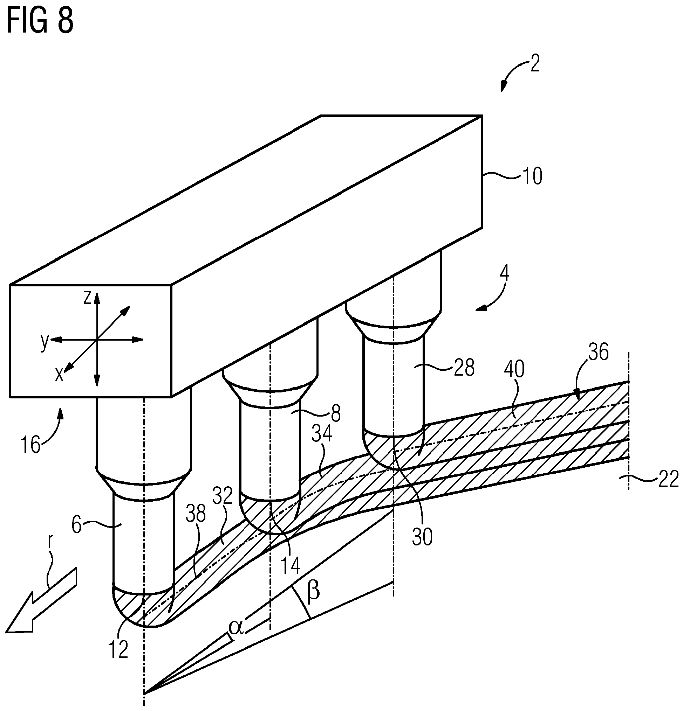

FIG 8 zeigt eine schematische dreidimensionale Darstellung eines Extrusionsverfahrens mit einer Düsenanordnung 4 mit drei Düsen 6, 8, 28 beim Drucken einer gekrümmten Bahn 38. Der Extruder 12 mit der Düsenanordnung 4 wird translatorisch in Druckrichtung r bewegt, wobei die erste Düse 6 in Druckrichtung r vorlaufend angeordnet ist. Mit der ersten Düse 6 wird ein erstes Extrusionsmaterial 32 durch einen ersten Auslass 12 extrudiert, mit der zweiten Düse 8 wird gleichzeitig ein zweites Extrusionsmaterial 34 durch einen zweiten Auslass 14 extrudiert und mit der dritten Düse 28 wird, gleichzeitig zum ersten Extrusionsmaterial 32 und zum zweiten Extrusionsmaterial 34, ein drittes Extrusionsmaterial 40 durch einen dritten Auslass 30 extrudiert. Ein dreidimensionales Druckobjekt 36 wird ausgebildet indem die Extrusionsmaterialien 32, 34, 40 aufeinander gedruckt werden. Beispielhaft sind die Extrusionsmaterialien 32, 34, 40 identisch. Alternativ unterscheidet sich zumindest eines der Extrusionsmaterialien 32, 34, 40 von den restlichen. Die weitere Ausführung der Anordnung 2 zur Materialextrusion in FIG 8 entspricht der Ausführung in FIG 3.

Zusammenfassend betrifft die Erfindung eine Anordnung 2 zur Materialextrusion bei einer additiven Fertigung eines dreidimensionalen Druckobjekts 36 mit einer Düsenanordnung 4. Um eine höhere Fertigungsgeschwindigkeit zu ermöglichen wird vorgeschlagen, dass die Düsenanordnung 4 translatorisch in drei Achsen X, Y, Z verfahrbar ist und eine erste Düse 6 sowie zumindest eine zweite Düse 8 umfasst, wobei die erste Düse 6 konfiguriert ist, ein erstes Extrusionsmaterial 32 durch einen ersten Auslass 12 zu extrudieren, wobei die zumindest eine zweite Düse 8 konfiguriert ist, gleichzeitig ein zweites Extrusionsmaterial 34 durch einen zweiten Auslass 14 zu extrudieren, wobei die zumindest eine zweite Düse 8 im Verhältnis zur ersten Düse 6 derartig drehbar angeordnet ist, dass die Düsen 6, 8 auf einer zu druckenden gekrümmten Bahn 38 jeweils zentriert angeordnet sind.

## Patentansprüche

1. Anordnung (2) zur Materialextrusion bei einer additiven Fertigung eines dreidimensionalen Druckobjekts (36) mit einer Düsenanordnung (4),
wobei die Düsenanordnung (4) translatorisch in drei Achsen (X, Y, Z) verfahrbar ist und eine erste Düse (6) sowie zumindest eine zweite Düse (8) umfasst,
wobei die erste Düse (6) konfiguriert ist, ein erstes Extrusionsmaterial (32) durch einen ersten Auslass (12) zu extrudieren,
wobei die zumindest eine zweite Düse (8) konfiguriert ist, gleichzeitig ein zweites Extrusionsmaterial (34) durch einen zweiten Auslass (14) zu extrudieren
wobei die zumindest eine zweite Düse (8) im Verhältnis zur ersten Düse (6) derartig drehbar angeordnet ist, dass die Düsen (6, 8) auf einer zu druckenden gekrümmten Bahn (38) jeweils zentriert angeordnet sind.

2. Anordnung (2) nach Anspruch 1,
aufweisend ein Stützelement (22), auf welchem ein zu druckendes dreidimensionales Druckobjekt (36) anordenbar ist,
wobei das Stützelement (22) zumindest rotatorisch beweglich ist.

3. Anordnung (2) nach Anspruch 2,
wobei das Stützelement (22) rotatorisch um einen Azimutwinkel (θ) und einen Elevationswinkel (ϕ) beweglich ist.

4. Anordnung (2) nach einem der vorherigen Ansprüche,
wobei der zweite Auslass (14) der zweiten Düse (8) im Verhältnis zum ersten Auslass (12) der, insbesondere vorlaufenden, ersten Düse (6) einen ersten Höhenunterschied (h1) aufweist, sodass die Extrusionsmaterialien (32, 34) aufeinander extrudierbar sind.

5. Anordnung (2) nach einem der vorherigen Ansprüche,
wobei das erste Extrusionsmaterial (32) dem zweiten Extrusionsmaterial (34) entspricht.

6. Anordnung (2) nach einem der vorherigen Ansprüche,
wobei die Düsenanordnung (4) eine dritte Düse (28) umfasst, welche konfiguriert ist, gleichzeitig zum ersten Extrusionsmaterial (32) und zum zweiten Extrusionsmaterial (34), ein drittes Extrusionsmaterial (40) durch einen dritten Auslass (30) zu extrudieren,
wobei die dritte Düse (28) im Verhältnis zur ersten Düse (6) derartig drehbar angeordnet ist, dass die Düsen (6, 8, 28) auf einer zu druckenden gekrümmten Bahn (38) jeweils zentriert angeordnet sind.

7. Anordnung (2) nach Anspruch 6,
wobei der zweite Auslass (14) der zweiten Düse (8) im Verhältnis zum ersten Auslass (12) der, insbesondere bezüglich der zweiten Düse (8) vorlaufenden, ersten Düse (6) einen ersten Höhenunterschied (h1) aufweist,
wobei der dritte Auslass (30) der dritten Düse (28) im Verhältnis zum zweiten Auslass (14) der, insbesondere bezüglich der dritten Düse (28) vorlaufenden, zweiten Düse (8) einen zweiten Höhenunterschied (h2) aufweist,
sodass die Extrusionsmaterialien (32, 34, 40) aufeinander extrudierbar sind.

8. Anordnung (2) nach einem der vorherigen Ansprüche,
wobei zumindest zwei Düsen (6, 8, 28) parallel angeordnet sind.

9. Verfahren zur Materialextrusion bei einer additiven Fertigung eines dreidimensionalen Druckobjekts (36) mit einer Düsenanordnung (4),
wobei die Düsenanordnung (4) translatorisch in drei Achsen (X, Y, Z) verfahrbar ist und eine erste Düse (6) sowie zumindest eine zweite Düse (8) umfasst,
wobei mit der ersten Düse (6) ein erstes Extrusionsmaterial (32) durch einen ersten Auslass (12) extrudiert wird,
wobei mit der zumindest einen zweiten Düse (8) gleichzeitig ein zweites Extrusionsmaterial (34) durch einen zweiten Auslass (14) extrudiert wird,
wobei die zumindest eine zweite Düse (8) im Verhältnis zur ersten Düse (6) derartig gedreht wird, dass die Düsen (6, 8) auf einer zu druckenden gekrümmten Bahn (38) jeweils zentriert angeordnet werden.

10. Verfahren nach Anspruch 9,
wobei das zu druckende dreidimensionale Druckobjekt (36) auf einem Stützelement (22) angeordnet wird,
wobei das Stützelement (22) rotatorisch bewegt wird.

11. Verfahren nach Anspruch 10,
wobei das Stützelement (22) rotatorisch um einen Azimutwinkel θ und einen Elevationswinkel ϕ bewegt wird.

12. Verfahren nach einem der Ansprüche 9 bis 11,
wobei der zweite Auslass (14) der zweiten Düse (8) im Verhältnis zum ersten Auslass (12) der, insbesondere vorlaufenden, ersten Düse (6) einen ersten Höhenunterschied (h1) aufweist,
wobei die Extrusionsmaterialien (32, 34, 40) aufeinander extrudiert werden.

13. Verfahren nach einem der Ansprüche 9 bis 12,
wobei die Düsenanordnung (4) eine dritte Düse (28) umfasst, wobei durch die dritte Düse (28), gleichzeitig zum ersten Extrusionsmaterial (32) und zum zweiten Extrusionsmaterial (34), ein drittes Extrusionsmaterial (40) durch einen dritten Auslass (30) extrudiert wird,
wobei die dritte Düse (28) im Verhältnis zur ersten Düse (6) derartig gedreht wird, dass die Düsen (6, 8, 28) auf einer zu druckenden gekrümmten Bahn (38) jeweils zentriert angeordnet werden.

14. Verfahren nach Anspruch 13,
wobei der zweite Auslass (14) der zweiten Düse (8) im Verhältnis zum ersten Auslass (12) der, insbesondere bezüglich der zweiten Düse (8) vorlaufenden, ersten Düse (6) einen ersten Höhenunterschied (h1) aufweist,
wobei der dritte Auslass (30) der dritten Düse (28) im Verhältnis zum zweiten Auslass (14) der, insbesondere bezüglich der dritten Düse (28) vorlaufenden, zweiten Düse (8) einen zweiten Höhenunterschied (h2) aufweist,
wobei die Extrusionsmaterialien (32, 34, 40) aufeinander extrudiert werden.

15. Steuereinheit (24) mit Mitteln zur Durchführung eines Verfahrens nach einem der Ansprüche 9 bis 14.
